# EUROPEAN PATENT SPECIFICATION

(11) **EP 0 805 286 B1**
(45) Date of publication and mention of the grant of the patent: **11.09.2002**
(21) Application number: 97302885.5
(22) Date of filing: 24.04.1997
(51) Int. Cl.: F16D 23/14

(54) **Diaphragm spring clutch actuating assembly**
Anordnung einer Tellerfederkupplungsbetätigung
Ensemble d'actionnement pour embrayage à ressort diaphragme

(30) Priority: 02.05.1996 GB 9609186
(43) Date of publication of application: 05.11.1997
(73) Proprietor: Automotive Products (Italia) S.p.A., 60030 Moie Di Maiolati, Spontini, Ancona (IT)
(72) Inventor: Gallagher, Paul, 60030 Ancona (IT)
(74) Representative: Morrall, Roger

(56) References cited:
- FR-A- 1 271 631
- FR-A- 2 597 561

## Description

The present invention relates to diaphragm spring assemblies for use in a pull type clutch, i.e. a clutch in which a clutch cover is secured to a flywheel including and located between the clutch cover and flywheel is a diaphragm spring which biases a pressure plate towards the flywheel to engage a driven plate located between the flywheel and pressure plate and to disengage the clutch a pull type load is applied via a release mechanism to diaphragm spring fingers pulling them away from the flywheel. Such a clutch shall hereinafter be described as a pull type clutch of the type described. In particular the present invention relates to diaphragm spring assemblies for use in pull type clutches of the type described for use in land vehicles.

Typically the flywheel includes a starter ring gear and is connected to the crankshaft of an engine. The flywheel could be of a type known as a divided flywheel or twin mass flywheel in which the flywheel is divided into 2 masses which can rotate relative to each other to a limited extent.

Traditionally pull type clutches of the type described including diaphragm spring assemblies are initially assembled onto an engine. Subsequently the transmission including the clutch release mechanism has to be assembled onto the engine and the clutch release mechanism has to be connected to the diaphragm spring. This connection has often been made with the use of an adapter plate, which is pre-assembled onto the diaphragm spring, the adaptor plate being coupled to an inner or outer race of a clutch release bearing and having a radial flange which acts evenly on all the diaphragm spring fingers.

An adaptor plate for a pull type clutch of the type described is known from FR 2 597 561. The known adaptor plate comprises a lever plate, a wedge collar and a snap ring. The lever plate has a radially extending flange which is attached to the radially inward ends of the spring fingers of a diaphragm spring by a number of clips. The lever plate also has an axially extending portions which projects axially outwardly through the inner periphery of the diaphragm spring and which is fitted onto a cylindrical outer peripheral surface of the wedge collar. Between the lever plate and the wedge collar is a snap ring which biases the wedge collar radially inwardly for engagement with a clutch release bearing. The wedge collar is axially moveable relative to the lever plate and may be biased axially outwardly by a cone spring acting between a radially extending portion of the wedge collar and a number of axially extending projections formed on the clips.

Such adaptor plates use a number of parts including complicated pressings which are expensive to produce. Also the clips required to connect the known adaptor plate to the diaphragm spring are complicated and so are also expensive to produce.

Also known from FR 1 271 631 are a number of methods of attaching a simple release bearing thrust ring to a diaphragm spring for use in a push type clutch. However, these methods have not previously been applied to the more complicated known adaptor plates used in pull type clutches of the type described.

The present invention seeks to mitigate the problems of known diaphragm spring assemblies for use in pull type clutches of the type described by enabling a diaphragm spring assembly including an adaptor plate to be made simply and cheaply using only a small number of different components.

Thus according to the present invention there is provided a diaphragm spring assembly for use in a pull type friction clutch, the assembly comprising a diaphragm spring consisting of an outer belleville spring portion joined to a plurality of radially inwardly projecting spring fingers circumferentially separated by slots , an adaptor plate connectable with a clutch release bearing, and fixing means which join the adaptor plate to radially inner end portions of the diaphragm spring fingers prior to the connection of the adaptor plate to the release bearing, the adaptor plate having an axially orientated portion for coupling to the release bearing and a radially orientated flange portion for acting on the end portions of the spring fingers characterised in that the radially orientated flange portion includes a substantially circumrferential fulcrum for engagement with the ends of the spring fingers on the pressure plate side thereof, the fulcrum being interrupted by circumferentially spaced holes through which axially orientated pin-like fixing elements extend, each fixing element having an axial portion which passes through a slot between two adjacent spring fingers and a head portion which overlaps at least one of the said two adjacent spring fingers on the release bearing side of the spring fingers to secure the adaptor plate to the diaphragm spring between the circumferential fulcrum and the head portions of the fixing elements.

Each fixing element may comprise a rivet or a nut or a bolt engaging a tapped bore in the adaptor plate.

Furthermore the diaphragm spring assembly may include a radial and circumferential clearance between each fixing element and the or each adjacent finger to allow a limited amount of relative radial movement between the diaphragm spring and the adaptor plate.

The invention will now be described, by way of example only, with reference to the accompanying drawings in which:-
Figure 1 is a cross section view of a pull type clutch of the type described including a diaphragm spring assembly according to the present invention and a clutch release bearing taken along the line XX of figure 2; Figure 1A is an enlarged view of part of figure 1;
Figure 2 is an axial view of the diaphragm spring assembly of Figure 1 taken in the direction of arrow A.
Figure 2A is an axial view of part of the adaptor plate of figure 1.

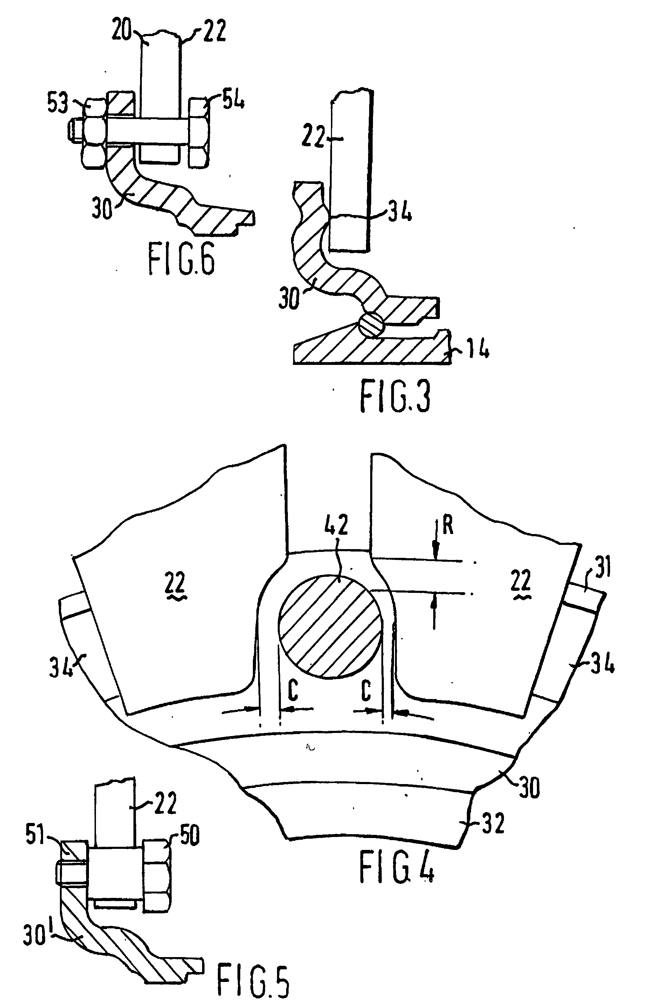

Figure 3 is a partial cross section view of the diaphragm spring assembly of figure 1 taken along the line YY of figure 2;
Figure 4 is an enlarged view of part of figure 2;
Figure 5 is a part cross section view of a further embodiment of a diaphragm spring assembly; and
Figure 6 is a part cross section view of a yet further embodiment of a diaphragm spring assembly.

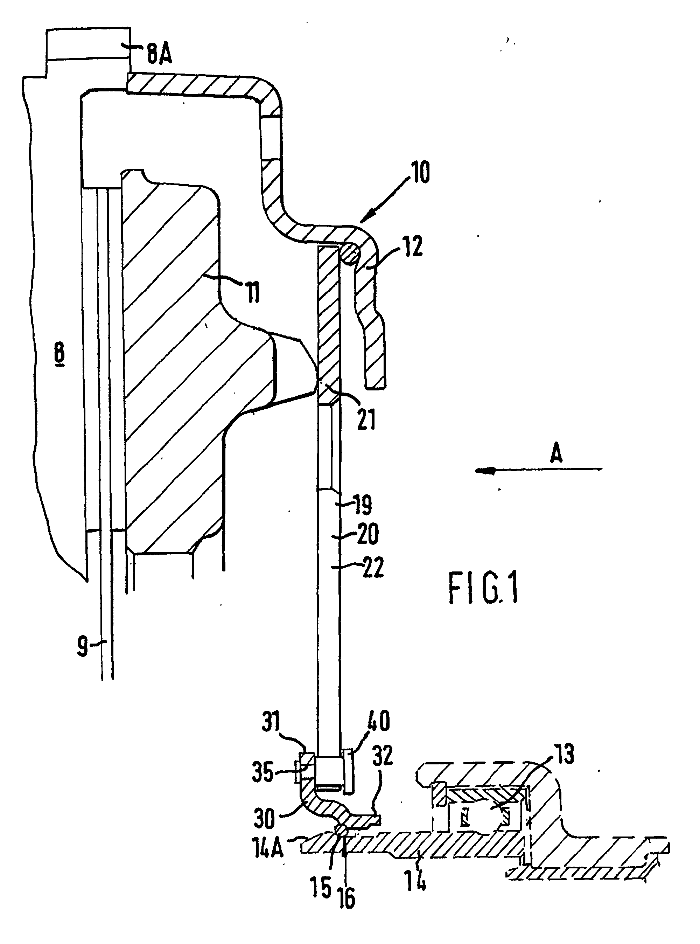

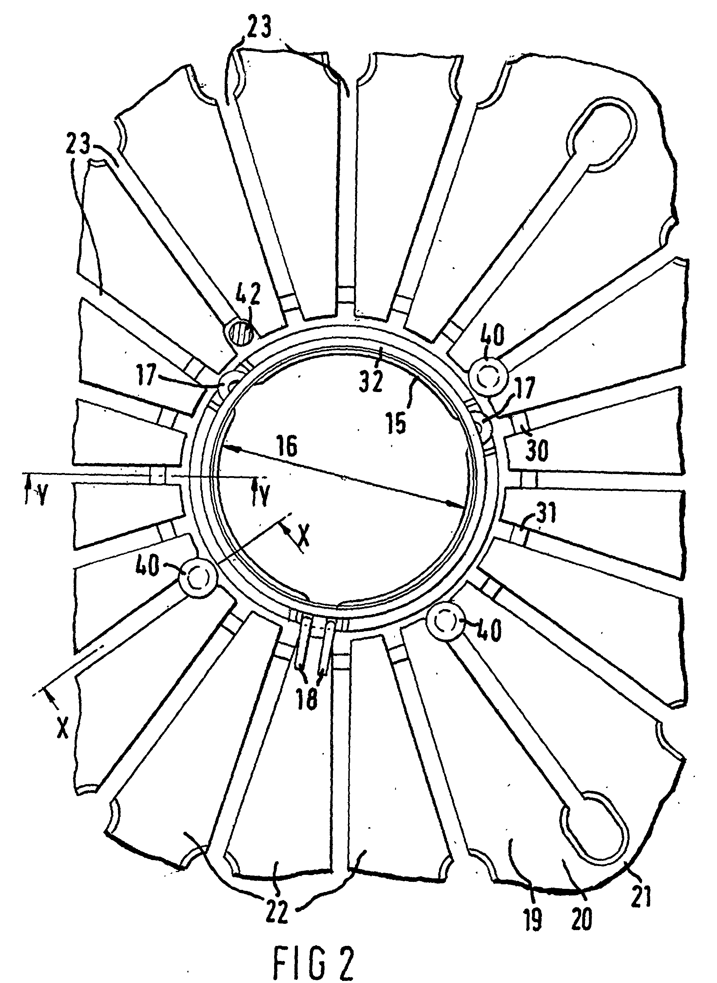

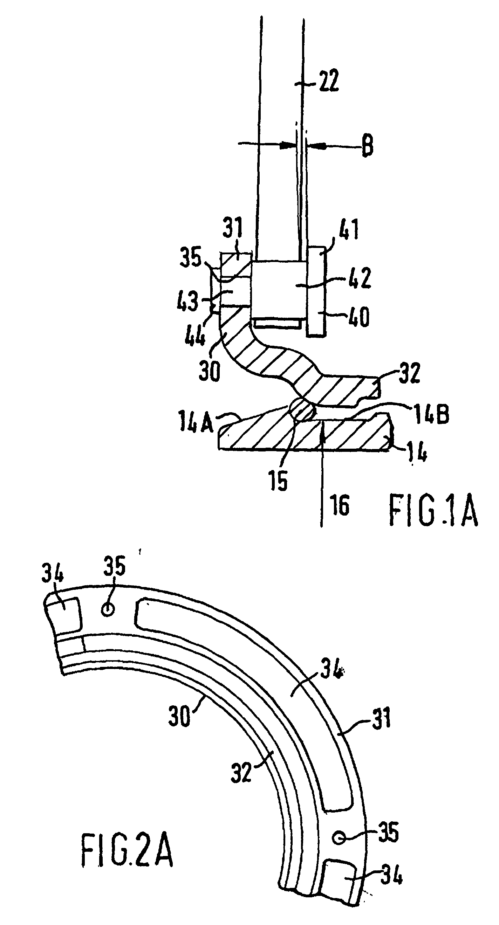

With reference to Figure 1 and 4 there is shown a pull type friction clutch 10 of the type described including a pressure plate 11 a clutch housing 12 and a diaphragm spring 20. The diaphragm spring 20 acts on the pressure plate 11 to engage a friction driven plate 9 with a flywheel 8 which includes starter ring teeth 8A. The diaphragm spring reacts against the clutch housing 12 which is fixed to the flywheel 8.

The diaphragm spring 20 consists of an outer annular belleville spring portion 21 with a plurality of radially in wardly orientated spring fingers 22.

Movement of the radially inner ends 23 of the spring fingers 22 to the right when viewing Figure 1 disengages the clutch in a manner known in the art.

An adapter plate 30 has a radially orientated flange 31 which is axially situated on the pressure plate side of the spring fingers 22, and an axially orientated cylindrical portion 32 which projects through the inner diameter of the spring fingers 22.

The radially orientated flange 31 has a substantially circumferential fulcrum 34 which the inner ends of the spring fingers 22 pivot about during engagement and disengagement of the clutch and during subsequent wear of the friction driven plate.

The circumferential extent of the fulcrum 34 is interrupted at, in this case, four positions by axial holes 35 in the radially orientated flange 31.

Individual fixing elements in the form of four generally axially oriented rivets 40 are used to secure the adapter plate 30 to the spring fingers 22 in a substantially axially and rotationally fast manner to form a diaphragm spring assembly 19.

Each rivet 40 has four portions, a head portion 41 of relatively large diameter, a shank portion 42 of smaller diameter than head portion 41, a fixing portion 43 which secures the rivet radially and circumferentially fast in its corresponding hole 35 and a peened portion 44 which secures the rivet axially fast and rigidly with the adapter plate 30. All four portions are of circular cross section.

The shank portion 42 of each rivet 40 passes through a corresponding slot 23 between two adjacent spring fingers 22.

It should be noted that the each slot 23 containing a rivet 40 is locally enlarged in the vicinity of the shank portion (see fig 4). There is a circumferential clearance C and a radial clearance R around each shank portion.

In the embodiment shown the circumferential clearance C controls the amount of relative radial movement between the diaphragm fingers and the adapter plate (to allow for misalignment of the release bearing 13 and diaphragm spring 20 axes) since the circumferential clearance C is smaller than the radial clearance R.

However in further embodiments the radial clearance R could be smaller than the circumferential clearance C and clearance R would then control the relative radial movement.

The clearances C and R, and the diameter of the shank 42 and head 41 portions are such that at any position of the adaptor plate 30 relative to the diaphragm spring 20 the head portion 41 of any particular rivet 40 always overlaps at least one (and preferably both) adjacent spring finger(s) 22. Thus once all the rivets 40 have been inserted through their appropriate slots 23 and into their appropriate holes 35 and fixed by peening the peening portion 44 over, the diaphragm spring 20 and adapter plate 30 are formed into a diaphragm spring assembly 19.

It should be noted that there is an axial clearance B between each head portion 41 and corresponding spring fingers 22. This ensures that the diaphragm spring is not clamped (or nipped) between the head portion 41 and adapter plate flange 31 and thus relative radial movement between the adapter plate 30 and the diaphragm spring 20 is restricted only by the clearances C or R.

Furthermore the clearance B is sufficiently large in the engaged position of a new clutch to ensure that in the disengaged position of a new or worn clutch or the engaged position of a worn clutch there is still a nominal clearance B.

Assembly of an engine and transmission including a diaphragm spring assembly 19 is typically as follows:
1) The clutch 10 including the diaphragm spring assembly 19 and snap ring 15 is assembled onto the crankshaft of the engine.
2) The clutch release bearing 13 is assembled onto the gear box.
3) The gear box is assembled onto the engine.
4) The clutch release bearing 13 is moved towards the engine.
5) The inner race 14 of the release bearing 13 enters the cylindrical portion 32 of the adapter plate 30 and also enters the inner diameter 16 of the snap ring 15.
6) Continued movement of the release bearing 13 towards the engine causes the snap ring diameter 16 to open out as it rides up the frustroconical surface 14A of the release bearing 13.
7) The frustroconical surface 14A also forces the snap ring 15 towards the engine which in turn reacts against the adapter plate 30, via the snap ring ears 17 and ends 18.
8) The adapter plate 30 is restrained from moving towards the engine when the head portion 41 of each rivet 40 contacts one of both adjacent spring fingers 22. The head portion thus resists the axial connecting push load that occurs when the clutch release bearing is connected with the adaptor plate.
9) Further movement of the release bearing 13 towards the engine causes the snap ring diameter to suddenly close as it engages in the snap ring groove 14B of the release bearing inner race. Disengagement of the clutch is then possible by moving the release bearing away from the engine.

The relative radial movement provided by the clearances R and C compensate for any misalignment between the release bearing 13 and diaphragm spring 20 both during assembly and once fully assembled.

Depending on the application, the gear box can be disassembled from the engine by releasing the snap ring 15 and removing the gear box and release bearing 13 together. Alternatively the gear box can be removed whilst leaving the release bearing 13 attached to the adapter plate 30 and subsequently releasing the snap ring and disassembling the release bearing 13 from the adaptor plate 30.

Figure 5 shows a further embodiment of the invention in which the fixing elements are shouldered bolts 50, which are screwed into threaded holes 51 in a modified adapter plate 30'.

Figure 6 shows a further embodiment of the invention in which each fixing elements comprise a self locking nut 53 and bolt 54 which are not secured rigidly to the adaptor plate but are free to float axially to a limited extent relative to the adaptor plate 30 and diaphragm spring 20.

It should be noted that in all embodiments the axially orientated discrete fixing elements constitute the sole method of substantially axially and rotationally fixing the adaptor plate to the diaphragm spring and no additional components are required.

Furthermore more or less than four fixing elements could be used and in particular three fixing elements could be used.

Preferably the fixing elements are circumferentially equi-spaced, requiring the number of spring fingers to be divisable by the number of fixing elements. However equi-spaced fixing are not required and approximate equi-spaced fixings can be achieved by using for example three fixing elements with a diaphragm spring with 20 spring fingers and spacing the fixing elements 108 degrees, 126 degrees and 126 degrees apart.

## Claims

1. A diaphragm spring assembly for use in a pull type friction clutch (10), the assembly comprising a diaphragm spring (20) consisting of an outer belleville spring portion (21) joined to a plurality of radially inwardly projecting spring fingers (22) circumferentially separated by slots (23), an adaptor plate (30) connectable with a clutch release bearing (13), and fixing means (40;50;54) which join the adaptor plate to radially inner end portions of the diaphragm spring fingers prior to the connection of the adaptor plate to the release bearing, the adaptor plate having an axially orientated portion (32) for coupling to the release bearing and a radially orientated flange portion (31) for acting on the end portions of the spring fingers **characterised in that** the radially orientated flange portion (31) includes a substantially circumferential fulcrum (34) for engagement with the ends of the spring fingers on the pressure plate side thereof, the fulcrum being interrupted by circumferentially spaced holes (35) through which axially orientated pin-like fixing elements (40;50;54) extend, each fixing element having an axial portion (42) which passes through a slot between two adjacent spring fingers and a head portion (41) which overlaps at least one of the said two adjacent spring fingers on the release bearing side of the spring fingers to secure the adaptor plate to the diaphragm spring between the circumferential fulcrum and the head portions of the fixing elements.

2. A diaphragm spring assembly as defined in claim 1 in which each fixing element consists of a rivet (40).

3. A diaphragm spring assembly as defined in claim 1 in which each fixing element consists of a bolt (50) which engages a threaded hole (51) in the adaptor plate.

4. A diaphragm spring assembly as defined in claim 1 in which each fixing element consists of a bolt (54) having a head on the release bearing side of the spring fingers which engages with a nut (53) on the pressure plate side of the radially orientated flange portion (31).

5. A diaphragm spring assembly as defined in any previous claim in which the fixing elements (40;50;54) permit a limited amount of relative axial movement between the adaptor plate and the diaphragm spring.

6. A diaphragm spring assembly as defined in any previous claim in which there is a radial (R) and circumferential (C) clearance between each fixing means and each corresponding adjacent finger to allow a limited amount of relative radial movement between the diaphragm spring and the adaptor plate to cater for misalignment of the release bearing and diaphragm spring axes.

7. A diaphragm spring assembly as defined in Claim 6 in which the amount of relative radial movement is limited by the circumferential clearance (C) between each fixing element and each corresponding adjacent finger.

8. A diaphragm spring assembly as defined in Claim 6 in which the amount of relative radial movement is limited by the radial clearance (R) between each fixing rivet or bolt and each corresponding adjacent finger.

9. A pull type clutch (10) which includes a diaphragm spring assembly as defined in any one of claims 1 to 8.

## Patentansprüche

1. Tellerfederanordnung zum Gebrauch in einer Zieh-Reibungskupplung (10), wobei die Anordnung eine Tellerfeder (20), die aus einem äußeren Tellerfederteil (21) besteht, der mit einer Vielzahl von radial nach innen ragenden Federfingern (22), die durch Schlitze (23) in Umfangsrichtung voneinander beabstandet sind, verbunden ist, eine Adapterplatte (30), die mit einem Kupplungsausrücklager (13) verbindbar ist, und Befestigungsmittel (40; 50; 54) umfaßt, die die Adapterplatte mit radial inneren Endabschnitten der Tellerfederfinger vor der Verbindung der Adapterplatte mit dem Ausrücklager verbinden, wobei die Adapterplatte einen axial gerichteten Teil (32) zum Verbinden mit dem Ausrücklager und einen radial gerichteten Flanschteil (31) zum Einwirken auf die Endabschnitte der Federfinger hat, **dadurch gekennzeichnet, daß** der radial gerichtete Flanschteil (31) eine im wesentlichen in Umfangsrichtung verlaufende Hebelunterlage (34) zur Anlage der Enden der Federfinger auf deren Druckplattenseite enthält, wobei die Hebelunterlage durch in Umfangsrichtung beabstandete Löcher (35) unterbrochen ist, durch welche axial gerichtete stiftähnliche Befestigungselemente (40; 50; 54) ragen, wobei jedes Befestigungselement einen axialen Abschnitt (42), der durch einen Schlitz zwischen zwei benachbarten Federfingern hindurchgeht, und einen Kopfabschnitt (41) hat, der mindestens einen der beiden benachbarten Federfinger auf der Ausrücklagerseite der Federfinger überlappt, um die Adapterplatte an der Tellerfeder zwischen der in Umfangsrichtung verlaufenden Hebelunterlage und den Kopfabschnitten der Befestigungselemente zu sichern.

2. Tellerfederanordnung nach Anspruch 1, bei der jedes Befestigungselement aus einem Niet (40) besteht.

3. Tellerfederanordnung nach Anspruch 1, bei der jedes Befestigungselement aus einem Bolzen (50) besteht, der in ein Gewindeloch (51) in der Adapterplatte eingreift.

4. Tellerfederanordnung nach Anspruch 1, bei der jedes Befestigungselement aus einem Bolzen (54) besteht, der einen Kopf auf der Ausrücklagerseite der Federfinger hat, wobei der Bolzen in eine Mutter (53) auf der Druckplattenseite des radial gerichteten Flanschteiles (31) eingreift.

5. Tellerfederanordnung nach irgend einem vorhergehenden Anspruch, bei der die Befestigungselemente (40; 50; 54) eine begrenzte relative Axialbewegung zwischen der Adapterplatte und der Tellerfeder zulassen.

6. Tellerfederanordnung nach irgend einem vorhergehenden Anspruch, bei der ein radial (R)- und ein Umfangs- (C)-Spiel zwischen jedem Befestigungsmittel und jedem entsprechenden benachbarten Finger vorhanden ist, um eine begrenzte relative Radialbewegung zwischen der Tellerfeder und der Adapterplatte zuzulassen, um für eine Fehlausrichtung der Ausrücklager- und Tellerfederachsen Vorsorge zu treffen.

7. Tellerfederanordnung nach Anspruch 6, bei der die relative Radialbewegung durch das Umfangsspiel (C) zwischen jedem Befestigungselement und jedem entsprechenden benachbarten Finger begrenzt wird.

8. Tellerfederanordnung nach Anspruch 6, bei der die relative Radialbewegung durch das Radialspiel (R) zwischen jedem Befestigungsniet oder -bolzen und jedem entsprechenden benachbarten Finger begrenzt wird.

9. Ziehkupplung (10), die eine Tellerfederanordnung nach irgend einem der Ansprüche 1 bis 8 enthält.

## Revendications

1. Ensemble de ressort-diaphragme destiné à être utilisé dans un embrayage à friction du type tiré (10), l'ensemble comprenant un ressort-diaphragme (20) consistant en une partie de rondelle Belleville extérieure (21) reliée à une pluralité de doigts de ressort s'étendant radialement vers l'intérieur (22) séparés circonférentiellement par des fentes (23), un plateau adaptateur (30) pouvant être relié à une butée de débrayage (13), et des moyens de fixation (40 ; 50 ; 54) qui relient le plateau adaptateur à des parties d'extrémité radialement intérieures des doigts de ressort-diaphragme avant la liaison du plateau adaptateur à la butée de débrayage, le plateau adaptateur comportant une partie orientée axialement (32) pour un accouplement à la butée de débrayage et une partie de rebord orientée radialement (31) pour agir sur les parties d'extrémité des doigts de ressort, **caractérisé en ce que** la partie de rebord orientée radialement (31) comprend une surface d'appui sensiblement circonférentielle (34) destinée à se mettre en prise avec les extrémités des doigts de ressort du côté du plateau de pression de ceux-ci, la surface d'appui étant interrompue par des orifices espacés circonférentiellement (35) à travers lesquels des éléments de fixation semblables à des axes orientés axialement (40 ; 50 ; 54) s'étendent, chaque élément de fixation comportant une partie axiale (42) qui passe à travers une fente entre deux doigts de ressort adjacents et une partie de tête (41) qui recouvre au moins l'un desdits deux doigts de ressort adjacents du côté de la butée de débrayage des doigts de ressort afin de fixer le plateau adaptateur au ressort-diaphragme entre la surface d'appui circonférentielle et les parties de tête des éléments de fixation.

2. Ensemble de ressort-diaphragme selon la revendication 1, dans lequel chaque élément de fixation consiste en un rivet (40).

3. Ensemble de ressort-diaphragme selon la revendication 1, dans lequel chaque élément de fixation consiste en un boulon (50) qui s'engage dans un trou taraudé (51) dans le plateau adaptateur.

4. Ensemble de ressort-diaphragme selon la revendication 1, dans lequel chaque élément de fixation consiste en un boulon (54) comportant une tête du côté de la butée de débrayage des doigts de ressort qui se met en prise avec un écrou (53) du côté du plateau de pression de la partie de rebord orientée radialement (31).

5. Ensemble de ressort-diaphragme selon l'une quelconque des revendications précédentes, dans lequel les éléments de fixation (40 ; 50 ; 54) permettent une quantité limitée de mouvement axial relatif entre le plateau adaptateur et le ressort-diaphragme.

6. Ensemble de ressort-diaphragme selon l'une quelconque des revendications précédentes, dans lequel il y a un jeu radial (R) et circonférentiel (C) entre chacun des moyens de fixation et chaque doigt adjacent correspondant pour permettre une quantité limitée de mouvement radial relatif entre le ressort-diaphragme et le plateau adaptateur en prévision d'un défaut d'alignement des axes de la butée de débrayage et du ressort-diaphragme.

7. Ensemble de ressort-diaphragme selon la revendication 6, dans lequel la quantité de mouvement radial relatif est limitée par le jeu circonférentiel (C) entre chaque élément de fixation et chaque doigt adjacent correspondant.

8. Ensemble de ressort-diaphragme selon la revendication 6, dans lequel la quantité de mouvement radial relatif est limitée par le jeu radial (R) entre chaque rivet ou boulon de fixation et chaque doigt adjacent correspondant.

9. Embrayage du type tiré (10) qui comprend un ensemble de ressort-diaphragme selon l'une quelconque des revendications 1 à 8.
